# EUROPEAN PATENT APPLICATION

(11) **EP 4 821 791 A1**
(43) Date of publication of application: **14.10.2026**
(21) Application number: 26166671.3
(22) Date of filing: 23.03.2026
(51) Int. Cl.: B62B 7/06, A45C 9/00, B62B 5/08, B62B 7/10

(54) **LUGGAGE STROLLER**

(30) Priority: 31.03.2025 CN 202510386838
(71) Applicant: Zhejiang Boan Mother and Child Products Co., Ltd., Wenzhou City, Zhejiang Province 325200 (CN)
(72) Inventor: CHI, Ruiwei, Wenzhou City, Zhejiang Province, 325200 (CN); LIU, Mingjun, Wenzhou City, Zhejiang Province, 325200 (CN)
(74) Representative: Longoni, Alessandra

(57) **Abstract**

The present invention discloses a luggage stroller, and relates to the luggage field. A technical solution of the present invention includes a luggage body, where the luggage body is provided with a wheel-leg assembly, a seat assembly, and a handle assembly. The wheel-leg assembly is disposed downwardly from the luggage body, and the wheel-leg assembly is configured to the luggage body; the seat assembly is disposed on an upper front side of the luggage body, and the seat assembly is configured to provide a foldable seat for use; and the handle assembly is disposed on a rear side of the luggage body and is configured to manually push the luggage body. Luggage and a seat are ingeniously integrated. Thus, through folding, the luggage stroller of the present invention can carry articles while providing a seat function, allowing a user to easily carry a child while transporting the luggage, and allowing the luggage and the stroller to be used together, thereby facilitating travel.

## Description

### FIELD OF TECHNOLOGY

The present invention relates to the field of luggage, and particularly to a luggage stroller.

### BACKGROUND

Families with children who travel not only need to bring their children but also carry a large amount of luggage. Under normal circumstances, it is necessary to carry both a stroller and a suitcase. In fact, it is inconvenient for one person to carry both a stroller and a suitcase. Currently, the solution to this problem includes, for example, the patent document with publication number CN1 119942B, which discloses a suitcase-style folding stroller. In the solution, the stroller is folded for storage. In addition, a larger bottom shell storage space is provided. However, this is essentially similar to a traditional stroller and does not have the functionality of a suitcase, making it impossible to pack items. In scenarios requiring transportation, items are prone to scattering.

### SUMMARY

To solve the above technical problem, the present invention provides a luggage stroller, where luggage and a seat are ingeniously integrated; thus, through folding, the luggage stroller of the present invention can carry articles while providing a seat function, allowing a user to easily carry a child while transporting the luggage, and allowing the luggage and the stroller to be used together, thereby facilitating travel.

A technical solution adopted by the present invention to solve the technical problem is as follows: a luggage stroller is provided, and includes a luggage body, where the luggage body is provided with a wheel-leg assembly, a seat assembly, and a handle assembly;

the wheel-leg assembly is disposed downwardly from the luggage body, and the wheel-leg assembly is configured to move the luggage body; the seat assembly is disposed on an upper front side of the luggage body, and the seat assembly is configured to provide a foldable seat for use; and the handle assembly is disposed on a rear side of the luggage body and is configured to manually push the luggage body.

In this solution, the seat assembly is disposed on the luggage body, which can provide a seat through folding for children to sit on. An adult can operate the handle assembly to push the luggage body. The luggage body is provided with the wheel-leg assembly, thereby making it easy to move. This solution integrates the functions of a stroller and luggage, making it more convenient to carry both luggage and children when traveling.

Preferably, a set of the wheel-leg assemblies is respectively disposed on two sides of the luggage body.

The wheel-leg assemblies include guide rails, sliding sleeves, wheel rods, and rollers.

The luggage body is vertically provided with the guide rails, the sliding sleeves are slidably fitted to the guide rails, engaging mechanisms are disposed between the guide rails and the sliding sleeves, and the engaging mechanisms fix the sliding sleeves to upper sections or lower sections of the guide rails.

Upper ends of two of the wheel rods are respectively located on two sides of the guide rails, lower ends of the two of the wheel rods are inclined in opposite directions, the wheel rods are slidably fitted relative to the luggage body, the upper ends of the wheel rods are connected to the sliding sleeves via a connecting rod, and the lower ends of the wheel rods are provided with the rollers.

The upper ends of the wheel rods are connected to the sliding sleeve via the connecting rod. Therefore, when the sliding sleeve is located at the upper portion of the guide rail, the wheel rods retract. When the sliding sleeve is located at the lower portion of the guide rail, the wheel rods extend. The two wheel rods are inclined in opposite directions. Therefore, when the wheel rods extend, the distance between lower ends of the wheel rods will be farther apart, thereby lowering the overall center of gravity and enhancing the moving and bearing function. When the wheel rods retract, the distance between the wheel rods is smaller, occupying less space.

Preferably, each of the engaging mechanisms comprises a sliding rod, a first locking block, and a second locking block.

The sliding rod is axially slidably fitted inside the guide rail, a reset elastic member is disposed between the sliding rod and the guide rail, and the reset elastic member is configured to drive the sliding rod to slide toward a first end of the guide rail;

A side wall of the guide rail is provided with a control window, and in this embodiment, the control window is located at an uppermost end of the guide rail. A side wall of the sliding rod is provided with a vertical pushing inclined surface. The control window is slidably fitted with an inclined ejector rod, and a front end of the inclined ejector rod is disposed corresponding to the vertical pushing inclined surface. An inclined surface at the front end of the inclined ejector rod is close to one side of the upper end of the guide rail, and the vertical pushing inclined surface matches the inclined surface at the front end of the inclined ejector rod.

The first locking block and the second locking block are respectively disposed corresponding to the upper section and lower section of the guide rail.

The first locking block is provided with a first control inclined surface and a first pin rod portion, the side wall of the sliding rod is provided with a first locking inclined surface adapted to the first control inclined surface, a side wall of the upper section of the guide rail is provided with a first locking hole adapted to the first pin rod portion, and the first locking block is provided with a first locking elastic member for pushing the first locking block toward the first locking hole. Inclination directions of the first control inclined surface, the first locking inclined surface, and the vertical pushing inclined surface are the same.

The second locking block is provided with a second control inclined surface and a second pin rod portion, the side wall of the sliding rod is provided with a second locking inclined surface adapted to the second control inclined surface, a side wall of the lower section of the guide rail is provided with a second locking hole adapted to the second pin rod portion, and the second locking block is provided with a second locking elastic member for pushing the second locking block toward the second locking hole.

Only one of two pairs of the first locking inclined surface and the first control inclined surface, and the second locking inclined surface and the second control inclined surface are aligned at any time.

When the inclined ejector rod slides toward an end away from the vertical pushing inclined surface,

the reset elastic member pushes the sliding rod to slide toward the lower section, the first locking inclined surface pushes the first control inclined surface, the first locking inclined surface moves out of contact and alignment with the first control inclined surface, the first locking block slides in a direction away from the first locking hole, and the first pin rod portion retracts from the first locking hole; and the second locking inclined surface comes into contact and alignment with the second control inclined surface, the second locking elastic member pushes the second locking block to slide toward the second locking hole, and the second pin rod portion extends outward from the second locking hole. Inclination directions of the second control inclined surface, the second locking inclined surface, and the vertical pushing inclined surface are opposite.

When the inclined ejector rod slides toward an end close to the vertical pushing inclined surface,
the inclined ejector rod pushes the vertical pushing inclined surface, so that the sliding rod slides toward the upper section; the second locking inclined surface pushes the second control inclined surface to come contact and alignment; the second locking inclined surface pushes the second control inclined surface out of contact and alignment, the second locking block slides in a direction away from the second locking hole, and the second pin rod portion retracts from the second locking hole; and the first locking inclined surface comes into contact and alignment with the first control inclined surface, the first locking elastic member pushes the first locking block to slide toward the first locking hole, and the first pin rod portion extends outward from the first locking hole; and
the sliding sleeve is provided with an outer hole adapted to the first pin rod portion or the second pin rod portion.

In an initial state, the sliding sleeve is located at a first upper section, and the first pin rod portion extended to the outside is locked into the outer hole, thereby locking the sliding sleeve at the upper section of the guide rail. In this case, the wheel rod is retracted inside the luggage body and locked.

When the wheel rod needs to be extended, the inclined ejector rod slides toward the end away from the vertical pushing inclined surface. The first pin rod portion retracts into the first locking hole, and the sliding sleeve is unlocked at the upper section. The sliding sleeve is driven to slide downward to the lower section under the weight of the wheel rod, and the second pin rod portion extends from the second locking hole to the outside and is locked into the outer hole, thereby locking the sliding sleeve at the lower section of the guide rail.

When the wheel rod needs to be retracted, under external force, the inclined ejector rod slides toward the end close to the vertical pushing inclined surface. The second pin rod portion retracts into the second locking hole, and the sliding sleeve is unlocked at the lower section. Under the gravity of the luggage body, the sliding sleeve slides upward to the upper section, and the first pin rod portion extends from the second locking hole to the outside, and the first pin rod portion is locked into the outer hole, thereby locking the sliding sleeve at the upper section of the guide rail.

Through the above structure, the sliding sleeve can be locked and unlocked at the upper section and the lower section, thereby enabling the extension and retraction of the wheel legs.

Preferably, a storage slot is provided outside a front side of the luggage body, and rotary bases are respectively disposed on two sides of an upper end of the storage slot; the seat assembly includes armrests, a backrest, and a seat plate, two ends of each of the armrests are respectively provided with armrest turntables corresponding to the two rotary bases, two sides of the backrest are respectively provided with backrest turntables corresponding to the two rotary bases, and two sides of the seat plate are respectively provided with seat plate turntables corresponding to the two rotary bases; and the rotary bases, the armrest turntables, the backrest turntables, and the seat plate turntables are respectively rotatably fitted.

Inner disk surfaces of the rotary bases are provided with rotary cavity slots, and outer disk surfaces of the armrest turntables are provided with armrest outer cavity slots.

The rotary cavity slots and the armrest outer cavity slots are engaged to form an outer locking cavity.

A first locking member and a first driving member are distributed from outside to inside within the outer locking cavity.

The first driving member is located in the armrest outer cavity slot, and the first driving member can axially slide but circumferentially rotate relative to the armrest outer cavity slot.

A side wall of the outer locking cavity is axially provided with a first guiding member from the rotary cavity slot to the armrest outer cavity slot, and the first locking member can axially slide but cannot circumferentially rotate relative to the outer locking cavity via the first guiding member. The first guiding member includes a first outer locking guiding section located in the rotary cavity slot and a second outer locking guiding section located in the armrest outer cavity slot.

A first spring is disposed between the first locking member and the rotary cavity slot, the first spring pushes the first locking member and the first driving member to slide toward an inner end side of the outer locking cavity.

During rotation of the backrest turntable, the first driving member is pushed to slide toward one side of an outer end of a rotating shaft, so that the first locking member is adapted only to the first outer locking guiding section or adapted to both the first outer locking guiding section and the second outer locking guiding section.

When the seat is not used, the armrests, the backrests, and the seat plate can be folded into the storage slot, the backrest serving as an outer cover plate covers the storage slot. When the seat is used, the armrests, the backrests, and the seat plate can be rotated open.

The rotary bases, the armrest turntable, the backrest turntable, and the seat plate turntable are respectively rotatably fitted, thus enabling adjustment of their relative angles and facilitating folding and storage. The outer locking cavity is provided with a first guiding member, allowing the first locking member to slide axially via the first guiding member. If the first locking member is solely located in the rotary cavity slot or the armrest outer cavity slot, relative rotation between the armrest turntable and the rotary base can be achieved. If the first locking member is located in both the armrest outer cavity slot and the rotary cavity slot, due to the presence of the first guiding member, the first locking member can only slide axially but cannot rotate circumferentially within the armrest outer cavity slot and the rotary cavity slot. Therefore, relative rotation between the armrest turntable and rotary base is not possible.

The specific state of the first locking member is determined jointly by the first driving member and the first spring. When the first driving member provides thrust to push the first locking member, the first locking member will be located in both the armrest outer cavity slot and the rotary cavity slot. If the first driving member does not provide thrust, the first locking member is only located within the rotary cavity slot under the push of the first spring.

Preferably, a driving plate is disposed outside the armrest turntable, the driving plate is disposed at an outer port of the control window, an outer end of the inclined ejector rod extends to the outside of the control window, and the outer end of the inclined ejector rod is provided with a wheel lock inclined surface corresponding to the driving plate.

A side wall of the armrest outer cavity slot is provided with an outer locking slot, the outer locking slot includes a first outer locking section and a second outer locking section, and the first outer locking section is located on an outer end side of the rotating shaft relative to the second outer locking section.

An inner end surface of the first driving member is provided with a first single inclined driving tooth corresponding to the outer locking slot, and the first single inclined driving tooth is axially slidably fitted to the outer locking slot.

An inner disk surface of the armrest turntable is provided with an engaging boss, and an outer side wall of the engaging boss includes a first boss section and a second boss section in sequence from an outer end to an inner end; the first boss section is located outside the second outer locking section; and a slot bottom of the second outer locking section passes through an outer wall of the first boss section.

The outer side wall of the engaging boss is rotatably fitted with the backrest turntable, and an inner edge at an outer end of the backrest turntable is provided with a first arc section unlocking slot corresponding to the first outer locking section.

When the rotary base, the armrest turntable, and the backrest turntable are in a folded state, the first arc section unlocking slot and the second outer locking section are staggered. An end of the first arc section unlocking slot pushes the first single inclined driving tooth to move to the first outer locking section. The first driving member pushes the first locking member to move toward the outer end of the rotating shaft, so that the first locking member is located in both the armrest outer cavity slot and the rotary cavity slot. The driving plate rotates with the armrest turntable to press the wheel lock inclined surface and push the inclined ejector rod to move into the control window.

The backrest turntable rotates relative to the armrest turntable in an unfolding direction until the first arc section unlocking slot coincides with the second outer locking section. The first spring pushes the first locking member to move toward an inner end of the rotating shaft, so that the first locking member is only located in the rotary cavity slot. The armrest turntable is rotated so that the armrest turntable is in an unfolded state relative to the rotary base; and the driving plate rotates with the armrest turntable to leave the inclined ejector rod, and the inclined ejector rod moves outside the control window.

A side wall of the engaging boss is provided with at least two positioning slots.

The backrest turntable is slidably fitted with a spring locking pin that abuts against the side wall of the engaging boss, a front end of the spring locking pin extends into the positioning slot, and the spring locking pin is adapted to the slot-exiting inclined surface.

When the armrest is folded, the driving plate can push the inclined ejector rod to fix the wheel-leg assembly inside the luggage body. When the armrest is opened, the driving plate moves away from the inclined ejector rod, the upper section of the guide rail is unlocked, and the wheel-leg assembly can be opened and the sliding sleeve is locked at the lower section of the guide rail.

The backrest turntable is rotated, the end of the first arc section unlocking slot pushes the first single inclined driving tooth, thereby controlling the first locking member to be located solely in the rotary cavity slot or in both the armrest outer cavity slot and the rotary cavity slot.

The spring locking pin is fitted with the positioning slot, so that the position of the backrest turntable relative to the armrest can be conveniently locked, preventing rotation thereof.

Preferably, an outer end edge of the backrest is provided with a spring latch abutting against an inner wall of the storage slot, and the inner wall of the storage slot is provided with a first locking hole for insertion of the spring latch.

A lever is hinged to a back surface of the backrest, the lever is provided with a hook, and the spring latch is provided with a hook hole for hanging the hook.

One end of a first drive cable is connected to the lever, and the other end of the first drive cable is connected to the spring latch.

In the initial state, the backrest is engaged with the storage slot, the spring latch is inserted forward into the positioning slot, the spring latch pulls the lever via the first drive cable, the lever is attached to the back surface of the backrest, and the spring latch extends and is inserted into the first locking hole.

When the lever is toggled, the spring latch is pulled out from the first locking hole, and the lever pulls the spring latch out of the positioning slot via the first drive cable.

When the seat is used, the armrest, the backrest, and the seat plate are folded in the storage slot and locked by the spring latch inserted into the first locking hole. When the seat is used, the lever is swung, so that the spring latch retracts from the first locking hole, unlocking the spring latch in the storage slot. In this case, the spring latch is pulled by the first drive cable, unlocking the relative position of the armrest and the backrest. This enables the lever to simultaneously unlock the two components.

Preferably, an end surface of the engaging boss is provided with an armrest inner cavity slot, an outer disk surface of the seat plate turntable is provided with a seat plate cavity slot, and the armrest inner cavity slot and the seat plate cavity slot are engaged to form an inner locking cavity.

The inner locking cavity is axially provided with a second guiding member and an inner locking slot in sequence from the armrest inner cavity slot to the seat plate cavity slot.

A second locking member can axially slide but circumferentially rotate relative to the inner locking cavity via the second guiding member, the second guiding member includes a first inner locking guiding section located in the armrest inner cavity slot and a second inner locking guiding section located in the seat plate cavity slot, a second spring is disposed between the second locking member and the seat plate cavity slot, and the second spring pushes the second locking member to slide toward an outer end side of the inner locking cavity.

The inner locking slot includes a first inner locking section and a second inner locking section, the first inner locking section is located in the second boss section and communicates with the inside and outside of the second boss section, the second inner locking section is located in the seat plate cavity slot, an inner end edge of the backrest turntable is provided with a second arc section unlocking slot, and one end of the second arc section unlocking slot is provided with a slot-exiting inclined surface corresponding to a rotation direction.

A side wall of the second locking member is provided with a second single inclined driving tooth, the second single inclined driving tooth passes through the second arc section unlocking slot via the first inner locking section, and an inclined surface of the second single inclined driving tooth is disposed corresponding to the slot-exiting inclined surface.

When the armrest turntable, the backrest turntable, and the seat plate turntable are in a folded state, the first arc section unlocking slot and the second inner locking section are staggered, so that the second single inclined driving tooth moves into the second inner locking section, the second locking member moves toward the inner end of the rotating shaft, and the second locking member is only adapted to the second inner locking guiding section.

When the backrest turntable rotates relative to the armrest turntable in the unfolding direction until the second arc section unlocking slot coincides with the second inner locking section, the second spring pushes the second locking member to move toward the outer end of the rotating shaft, so that the second locking member is adapted to both the first inner locking guiding section and the second inner locking guiding section; and the armrest turntable is rotated so that the armrest turntable is in the unfolded state relative to the rotary base.

The second locking member locks the relative position of the armrest turntable and the seat plate turntable. If the second locking member can only slide axially but cannot rotate circumferentially relative to the armrest inner cavity slot and the seat plate cavity slot, when the second locking member is located only in the armrest inner cavity slot, the armrest turntable and the seat plate turntable can rotate relative to each other. However, if the second locking member is located in both the armrest inner cavity slot and the seat plate cavity slot, a relative angle between the armrest turntable and the seat plate turntable will be locked. The axial movement of the second locking member is achieved by the movement of the backrest turntable. Specifically, when the second arc section unlocking slot coincides with the first inner locking section, the second single inclined driving tooth is located in the second arc section unlocking slot, and the second locking member is located only in the armrest inner cavity slot. As the armrest, the backrest and the seat plate are unfolded, the backboard turntable rotates accordingly. The slot-exiting inclined surface of the second arc section unlocking slot pushes the second single inclined driving tooth to move toward the seat plate cavity slot. The second arc section unlocking slot and the first inner locking section are staggered, and finally, the second locking member is located in both the armrest inner cavity slot and the seat plate cavity slot.

Preferably, the handle assembly includes a handle body.

An end of the handle body is provided with a handle turntable, a disk surface of the handle turntable is provided with a handle cavity slot, a side wall of the handle cavity slot is provided with a limit pin hole, a spring limit pin pointing toward the handle cavity slot is disposed in the limit pin hole, a tail end of the spring limit pin is connected to one end of the drive cable, and the other end of the drive cable extends to the handle body.

A base turntable is respectively disposed at two ends, corresponding to the handle body, of the luggage body. A disk surface of the base turntable is provided with a limit boss corresponding to the handle cavity slot, the base turntable is rotatably engaged with the handle cavity slot, and the limit boss is rotatably fitted into the handle cavity slot; and a side wall of the limit boss is circumferentially provided with several limit slots adapted to a front end of the spring limit pin. Preferably, the handle body is provided with a pressing portion, the pressing portion is longitudinally slidably fitted with a drive slider, and the drive slider is provided with a pressing inclined surface; the pressing portion is laterally slidably fitted with an unlocking switch, one side of the unlocking switch is provided with a pressing section, and the other side of the unlocking switch is provided with an unlocking inclined surface adapted to the pressing inclined surface; an unlocking spring is disposed between the unlocking switch and the pressing portion, the unlocking spring pushes the unlocking switch to move away from the drive slider, and the drive slider slides toward one end of the drive cable; and the unlocking inclined surface pushes the pressing inclined surface by pressing the unlocking switch, so that the drive slider slides away from one end of the drive cable. Preferably, the luggage body is provided with a storage compartment, a compartment opening of the storage compartment is provided with a lid, one end of the lid is hinged to the storage compartment, and the other end of the storage compartment is provided with a knob switch.

Two sides of the knob switch are respectively provided with a locking rod, the locking rod slidably fitted relative to the lid, an inner end of the locking rod is provided with a pin hook, the knob switch is provided with a V-shaped contact surface for pulling and hanging the pin hook, an outward-pushing spring is disposed between the locking rod and the lid, the outward-pushing spring pushes the locking rod outward relative to the lid, and an inner wall of the storage compartment is provided with a second locking hole for insertion of an outer end of the locking rod; and when the knob switch is rotated, the V-shaped contact surface drives the pin hook, so that the locking rod retracts inward.

In a normal state, the outer end of the locking rod is fitted with the second locking hole to achieve closed locking of the lid of the storage compartment. When the lid needs to be opened, the knob switch is rotated, and the V-shaped contact surface will drive the pin hook inward during rotation, thereby driving the locking rod to slide inward.

Beneficial effects of the present invention are that:
In the solution, luggage and a seat are ingeniously integrated. Thus, through folding, the luggage stroller of the present invention can carry articles while providing a seat function, allowing a user to easily carry a child while transporting luggage. A folding storage design is adopted for an overall structure, so that the seat can be stored when not used, avoiding occupying external space, and preventing the need to carry both the luggage and the stroller, thereby facilitating travel.

### BRIEF DESCRIPTION OF THE DRAWINGS

In order to more clearly explain embodiments of the present disclosure or the technical solution in the prior art, the accompanying drawings needed in the descriptions of the embodiments will be briefly introduced below. Apparently, the accompanying drawings in the following descriptions are only thirty-three drawings of the present disclosure. Other accompanying drawings also may be obtained by ordinary persons skilled in the art based on these drawings without any creative labor.
FIG. 1 is an external schematic diagram of a seat assembly in an open state according to an embodiment of the present invention.
FIG. 2 is a schematic diagram of a wheel-leg assembly inside a luggage body according to an embodiment of the present invention.
FIG. 3 is a sectional view of a seat assembly in an open state according to an embodiment of the present invention.
FIG. 4 is a schematic diagram of a wheel-leg assembly in an extended state according to an embodiment of the present invention.
FIG. 5 is a schematic diagram showing a state of a retracted wheel rod according to an embodiment of the present invention.
FIG. 6 is a schematic diagram of a slider and a connecting rod according to an embodiment of the present invention.
FIG. 7 is a first exploded view of a sliding rod, a first locking block, and a second locking block according to an embodiment of the present invention.
FIG. 8 is a second exploded view of a sliding rod (without a housing), a first locking block, and a second locking block according to an embodiment of the present invention.
FIG. 9 is a schematic diagram of a slider being in a lower section and a second pin rod portion extending into an outer hole according to an embodiment of the present invention.
FIG. 10 is a schematic diagram of a slider in a lower section and a second pin rod portion retracted from an outer hole according to an embodiment of the present invention.
FIG. 11 is a schematic diagram of a slider being in an upper section and a first pin rod portion being about to extend into an outer hole according to an embodiment of the present invention.
FIG. 12 is a schematic diagram of a slider being in an upper section and a first pin rod portion extending into an outer hole according to an embodiment of the present invention.
FIG. 13 is a schematic diagram of a seat assembly according to an embodiment of the present invention.
FIG. 14 is an exploded view from a left perspective according to an embodiment of the present invention.
FIG. 15 is an exploded view from a right perspective according to an embodiment of the present invention.
FIG. 16 is a schematic diagram of a rotary base according to an embodiment of the present invention.
FIG. 17 is a schematic diagram of a first locking member according to an embodiment of the present invention.
FIG. 18 is a schematic diagram of a first driving member according to an embodiment of the present invention.
FIG. 19 is a left perspective view of a handle turntable according to an embodiment of the present invention.
FIG. 20 is a right perspective view of a handle turntable according to an embodiment of the present invention.
FIG. 21 is a left perspective view of a backrest turntable according to an embodiment of the present invention.
FIG. 22 is a right perspective view of a backrest turntable according to an embodiment of the present invention.
FIG. 23 is a schematic diagram of a second locking member according to an embodiment of the present invention.
FIG. 24 is a schematic diagram of a seat plate turntable according to an embodiment of the present invention.
FIG. 25 is a schematic diagram of a driving plate not yet pressing an inclined ejector rod according to an embodiment of the present invention.
FIG. 26 is a schematic diagram of a driving plate pressing an inclined ejector rod according to an embodiment of the present invention.
FIG. 27 is a sectional view of a back plate engaged with a storage slot according to an embodiment of the present invention.
FIG. 28 is a sectional view of a luggage with a toggle lever according to an embodiment of the present invention.
FIG. 29 is a schematic diagram of a handle assembly according to an embodiment of the present invention.
FIG. 30 is a first partially exploded schematic diagram of a handle assembly according to an embodiment of the present invention.
FIG. 31 is a second partially exploded schematic diagram of a handle assembly according to an embodiment of the present invention.
FIG. 32 is a schematic diagram showing engagement of a knob switch and a lid according to an embodiment of the present invention.
FIG. 33 is a schematic diagram showing unlocking of a knob switch and a lid according to an embodiment of the present invention.

1. Luggage body; 2. Storage slot; 3. Driving plate; 4. Wheel lock inclined surface; 5. Lever; 6. Hook; 7. Hook hole; 8. First locking hole; 9. First drive cable; 10. Storage compartment; 11. Lid; 12. Knob switch; 13. V-shaped contact surface; 14. Locking rod; 15. Outward-pushing spring; 17. Guide rail; 18. Sliding sleeve; 19. Outer hole; 20. Inclined guide port; 21. Wheel rod; 22. Connecting rod; 23. Roller; 24. Guide wheel; 25. Sliding rod; 26. First locking inclined surface; 27. Second locking inclined surface; 28. First locking block; 29. First control inclined surface; 30. First pin rod portion; 31. Second locking block; 32. Second control inclined surface; 33. Second pin rod portion; 34. Reset elastic member; 35. Control window; 36. Inclined ejector rod; 37. Vertical pushing inclined surface; 38. Backrest; 39. Armrest; 40. Seat plate; 41. Rotary base; 42. Rotary cavity slot; 43. First guiding member; 44. Armrest turntable; 45. Armrest outer cavity slot; 46. Outer locking slot; 47. First outer locking section; 48. Second outer locking section; 49. Armrest inner cavity slot; 50. Guide post; 51. Rib; 52. engaging boss ; 53. First boss section; 54. Second boss section; 55. Positioning slot; 56. First inner locking section; 57. Second inner locking section; 58. First spring; 59. First driving member; 60. First single inclined driving tooth; 61. First locking member; 62. First guiding limit tooth; 63. Spring locking pin; 64. Back plate rotation ring; 65. First arc section unlocking slot; 66. Second arc section unlocking slot; 67. Slot-exiting inclined surface; 68. seat plate turntable; 69. Seat plate cavity slot; 70. Second guiding member; 71. Second locking member; 72. Second spring; 73. Second single inclined driving tooth; 74. Handle body; 75. Handle turntable; 76. Handle cavity slot; 77. Base turntable; 78. Limit boss; 79. Spring limit pin; 80. Limit slot; 81. Drive cable; 82. Inner shaft; 83. Limit strip-shaped hole; 84. Limit pin hole; 85. Pressing inclined surface; 86. Unlocking switch; 87. Pressing section; 88. Unlocking inclined surface; 89. Unlocking spring; 90. Sliding positioning slot; 91. Pressing portion; 92. Drive slider; 93. First locking hole; 94. First locking elastic member; 95. Second locking hole; 96. Second locking elastic member; 97. First control slot; 98. Second control slot; 99. Third control slot; 100. Square tube; 101. Positioning rod; 102. Spring latch.

### DESCRIPTION OF THE EMBODIMENTS

In order to deepen the understanding of the present invention, the following will provide a further detailed description of the present invention in conjunction with the accompanying drawings and the embodiments. This embodiment is only intended to explain the present invention and does not constitute a limitation to the scope of protection of the present invention.

### Embodiment

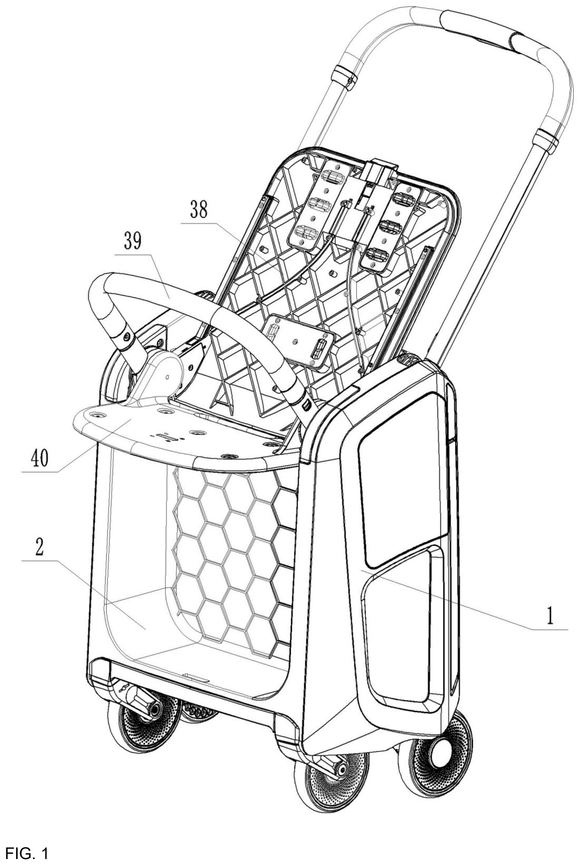

As shown in FIG. 1, the luggage stroller includes a luggage body, where the luggage body is provided with a wheel-leg assembly, a seat assembly, and a handle assembly.

The wheel-leg assembly is disposed downwardly from the luggage body, and the wheel-leg assembly is configured to move the luggage body; the seat assembly is disposed on an upper front side of the luggage body, and the seat assembly is configured to provide a foldable seat for use; and the handle assembly is disposed on a rear side of the luggage body and is configured to manually push the luggage body.

In this solution, the seat assembly is disposed on the luggage body, which can provide a seat through folding for children to sit on. An adult can operate the handle assembly to push the luggage body. The luggage body is provided with the wheel-leg assembly, thereby making it easy to move. This solution integrates the functions of a stroller and luggage, making it more convenient to carry both luggage and children when traveling.

A set of the wheel-leg assemblies is respectively disposed on two sides of the luggage body.

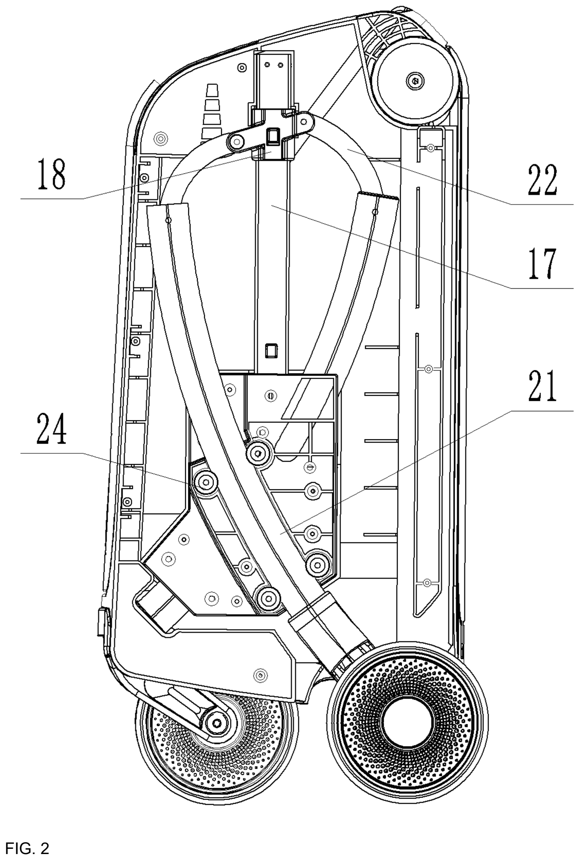

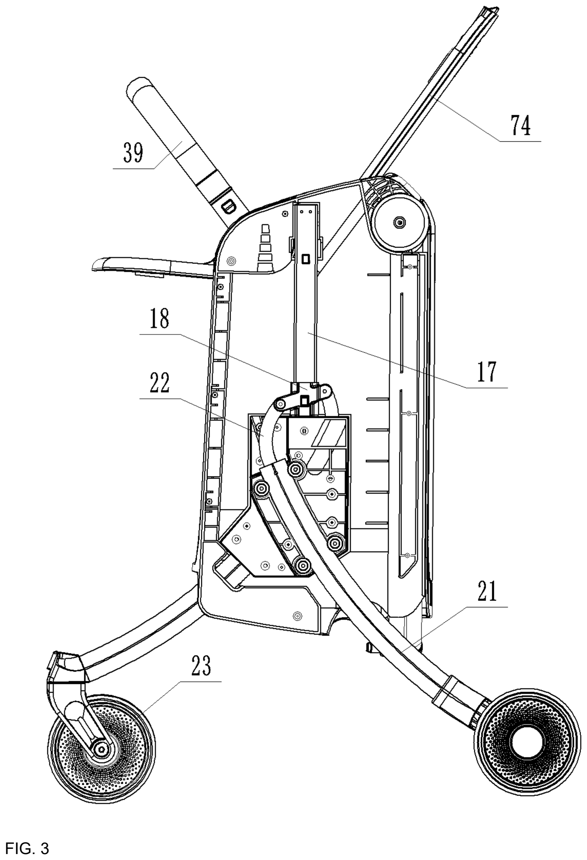

Refer to FIG. 2 and FIG. 3. The wheel-leg assemblies include guide rails 17, sliding sleeves 18, wheel rods 21, and rollers 23.

The luggage body is vertically provided with the guide rails 17, the sliding sleeves 18 are slidably fitted to the guide rails 17, engaging mechanisms are disposed between the guide rails 17 and the sliding sleeves 18, and the engaging mechanisms fix the sliding sleeves 18 to upper sections or lower sections of the guide rails 17.

Upper ends of two of the wheel rods 21 are respectively located on two sides of the guide rails 17, lower ends of the two of the wheel rods 21 are inclined in opposite directions, the wheel rods 21 are slidably fitted relative to the luggage body, the upper ends of the wheel rods 21 are connected to the sliding sleeves 18 via a connecting rod 22, and the lower ends of the wheel rods 21 are provided with the rollers 23.

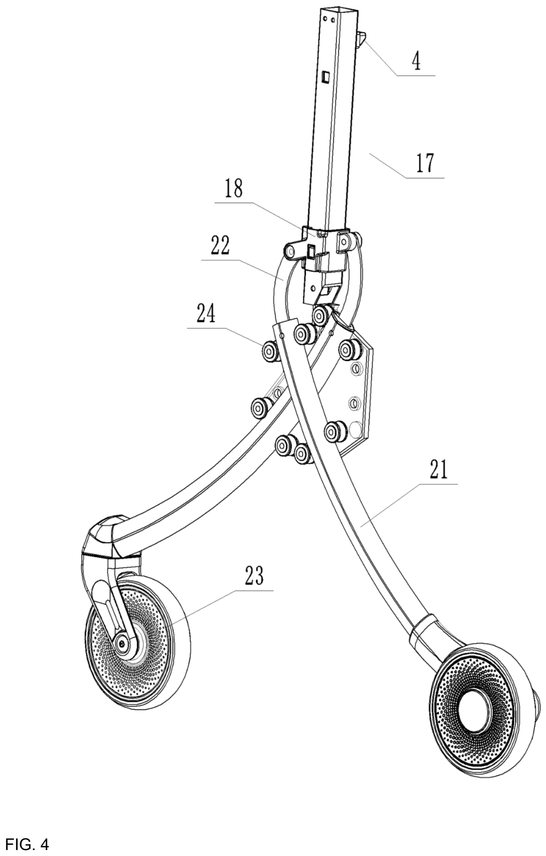

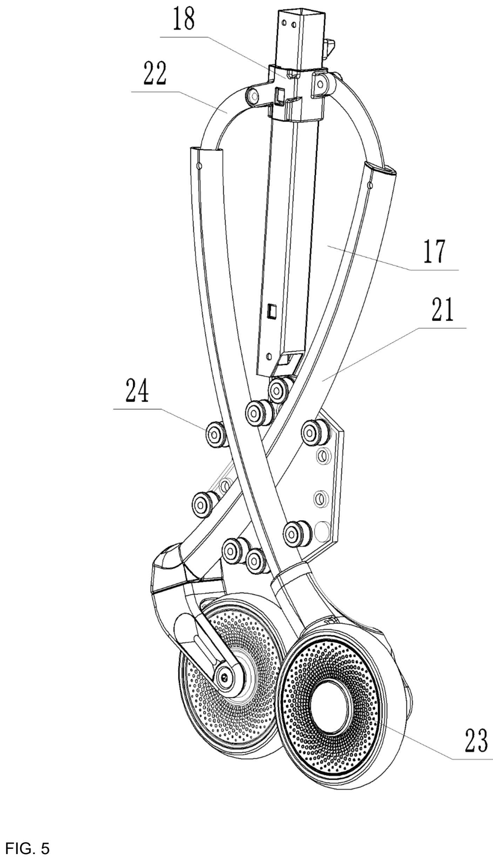

Refer to FIG. 4, FIG. 5, and FIG. 6. The upper ends of the wheel rods 21 are connected to the sliding sleeve 18 via the connecting rod 22. Therefore, when the sliding sleeve 18 is located at the upper portion of the guide rail 17, the wheel rods 21 retract. When the sliding sleeve 18 is located at the lower portion of the guide rail 17, the wheel rods 21 extend. The two wheel rods 21 are inclined in opposite directions. Therefore, when the wheel rods 21 extend, the distance between lower ends of the wheel rods 21 will be farther apart, thereby lowering the overall center of gravity and enhancing the moving and bearing function. When the wheel rods retract, the distance between the wheel rods is smaller, occupying less space.

The luggage body is provided with several guide wheels 24 adapted to side portions of the wheel rods 21. The use of the guide wheels 24 can reduce friction between the wheel rods 21 and the luggage body. The lower ends of the two wheel rods 21 are distributed crosswise toward the other side of the guide rail 17. The two wheel rods occupy a smaller space when retracted, and provide a sufficiently large spacing when extended.

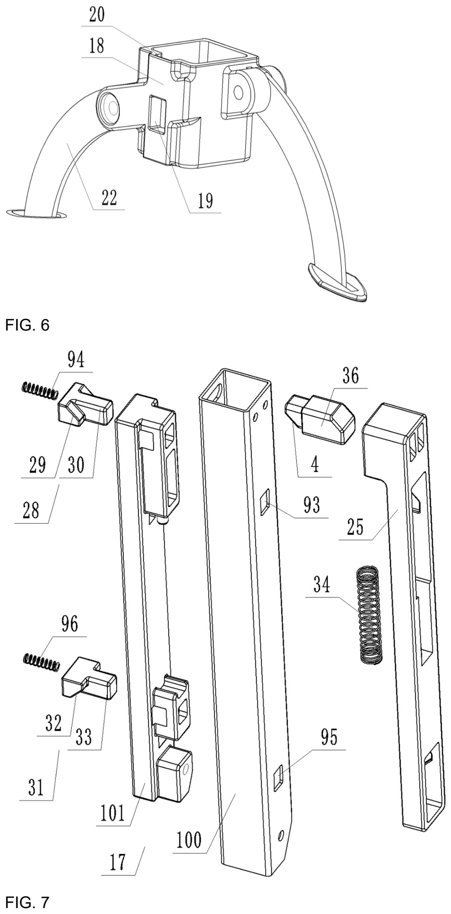

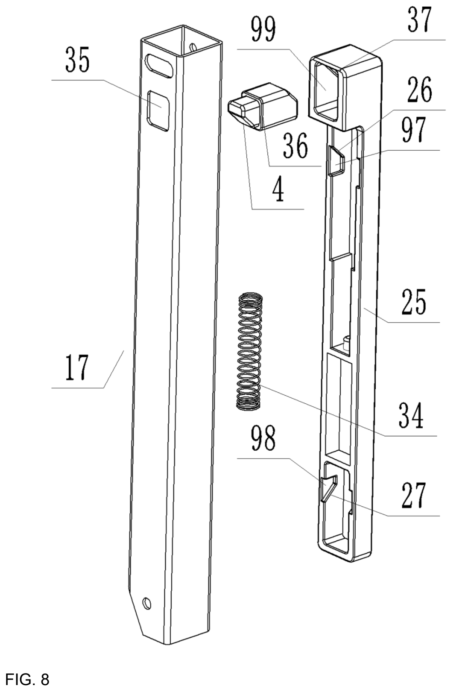

Refer to FIG. 7 and FIG. 8, each of the engaging mechanisms includes a sliding rod 25, a first locking block 28, and a second locking block 31.

The sliding rod 25 is axially slidably fitted inside the guide rail 17, a reset elastic member 34 is disposed between the sliding rod 25 and the guide rail 17, and the reset elastic member 34 is configured to drive the sliding rod 25 to slide toward a first end of the guide 17.

A side wall of the guide rail 17 is provided with a control window 35, a side wall of the sliding rod 25 is provided with a vertical pushing inclined surface 37, the control window 35 is slidably fitted with an inclined ejector rod 36, and a front end of the inclined ejector rod 36 is disposed corresponding to the vertical pushing inclined surface 37.

The first locking block 28 and the second locking block 31 are respectively disposed corresponding to the upper section and lower section of the guide rail 17.

The first locking block 28 is provided with a first control inclined surface 29 and a first pin rod portion 30, the side wall of the sliding rod 25 is provided with a first locking inclined surface 26 adapted to the first control inclined surface 29, a side wall of the upper section of the guide rail 17 is provided with a first locking hole 93 adapted to the first pin rod portion 30, and the first locking block 28 is provided with a first locking elastic member 94 for pushing the first locking block toward the first locking hole 93.

The second locking block 31 is provided with a second control inclined surface 32 and a second pin rod portion 33, the side wall of the sliding rod 25 is provided with a second locking inclined surface 27 adapted to the second control inclined surface 32, a side wall of the lower section of the guide rail 17 is provided with a second locking hole 95 adapted to the second pin rod portion 33, and the second locking block 31 is provided with a second locking elastic member 96 for pushing the second locking block toward the second locking hole 95.

In this embodiment, the guide rail includes an external square tube 100 and an internal positioning rod 101. The positioning rod 101 is fixed inside the square tube 100 and is configured to provide the irregular structure inside the square tube 100. In this embodiment, the first locking hole 93 includes two parts: the square tube 100 and the positioning rod 101. In the figure, only the part of the positioning rod 101 is marked. The second locking hole 95 is similar.

Only one of two pairs of the first locking inclined surface 26 and the first control inclined surface 29, and the second locking inclined surface 27 and the second control inclined surface 32 is aligned at any time.

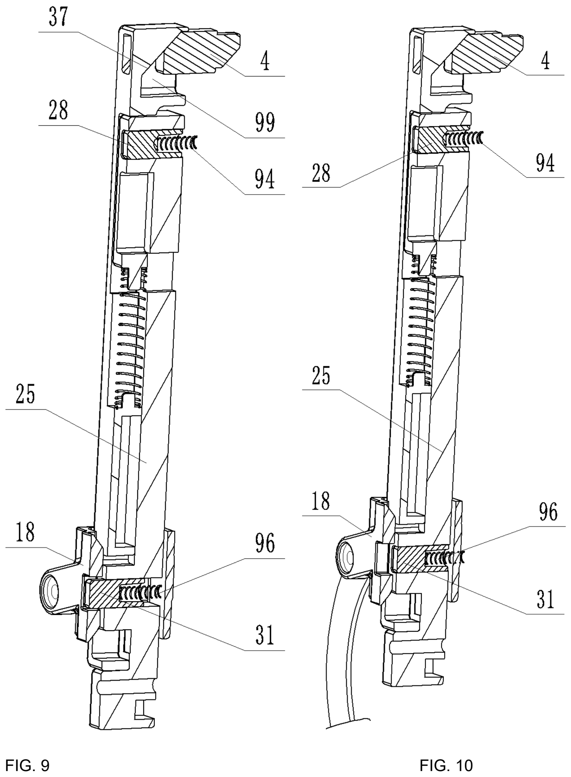

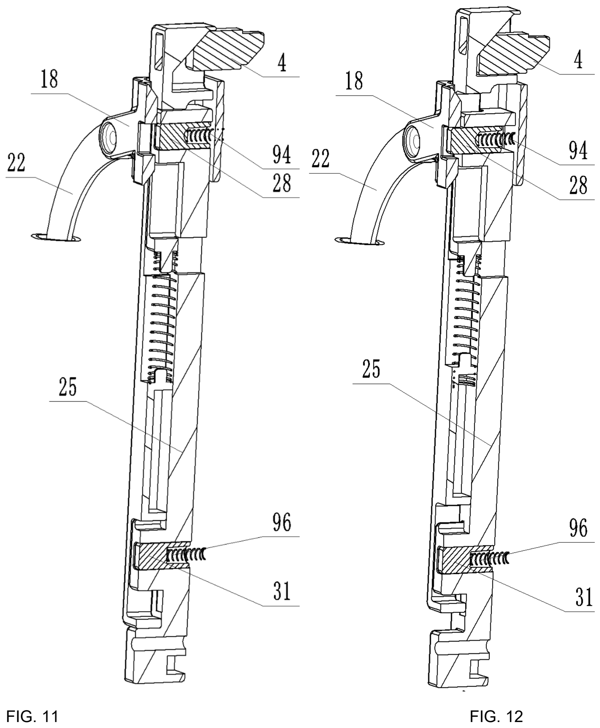

Refer to FIG. 9 to FIG. 12. When the inclined ejector rod 36 slides toward an end away from the vertical pushing inclined surface 37,

the reset elastic member 34 pushes the sliding rod 25 to slide toward the lower section, the first locking inclined surface 26 pushes the first control inclined surface 29, the first locking inclined surface 26 move out of contact and alignment with the first control inclined surface 29, the first locking block 28 slides in a direction away from the first locking hole 93, and the first pin rod portion 30 retracts from the first locking hole 93; and the second locking inclined surface 27 comes into contact and alignment with the second control inclined surface 32, the second locking elastic member 96 pushes the second locking block 31 to slide toward the second locking hole 95, and the second pin rod portion 33 extends outward from the second locking hole 95.

When the inclined ejector rod 36 slides toward an end close to the vertical pushing inclined surface 37,

the inclined ejector rod 36 pushes the vertical pushing inclined surface 37, so that the sliding rod 25 slides toward the upper section, the second locking inclined surface 27 pushes the second control inclined surface 32 to come into contact and alignment; the second locking inclined surface 27 pushes the second control inclined surface 32 out of contact and alignment, the second locking block 31 slides in a direction away from the second locking hole 95, and the second pin rod portion 33 retracts from the second locking hole 95; and the first locking inclined surface 26 comes into contact and alignment with the first control inclined surface (29), the first locking elastic member 94 pushes the first locking block (28) to slide toward the first locking hole 93, and the first pin rod portion 30 extends outward from the first locking hole 93.

The sliding sleeve 18 is provided with an outer hole 19 adapted to the first pin rod portion 30 or the second pin rod portion 33.

In an initial state, the sliding sleeve 18 is located at a first upper section, and the first pin rod portion 30 extended to the outside is locked into the outer hole 19, thereby locking the sliding sleeve 18 at the upper section of the guide rail. In this case, the wheel rod 21 is retracted inside the luggage body and locked.

When the wheel rod 21 needs to be extended, the inclined ejector rod 36 slides toward the end away from the vertical pushing inclined surface 37. The first pin rod portion 30 retracts into the first locking hole 93, and the sliding sleeve 18 is unlocked at the upper section. The sliding sleeve 18 is driven to slide downward to the lower section under the weight of the wheel rod, and the second pin rod portion 33 extends from the second locking hole 95 to the outside and is locked into the outer hole 19, thereby locking the sliding sleeve 18 at the lower section of the guide rail.

When the wheel rod 21 needs to be retracted, under external force, the inclined ejector rod 36 slides toward the end close to the vertical pushing inclined surface 37. The second pin rod portion 33 retracts into the second locking hole 95, and the sliding sleeve 18 is unlocked at the lower section. Under the gravity of the luggage body, the sliding sleeve 18 slides upward to the upper section, and the first pin rod portion 30 extends from the second locking hole 95 to the outside, and the first pin rod portion 30 is locked into the outer hole 19, thereby locking the sliding sleeve 18 at the upper section of the guide rail.

Through the above structure, the sliding sleeve 18 can be locked and unlocked at the upper section and the lower section, thereby enabling the extension and retraction of the wheel legs.

The side wall of the sliding rod 25 is provided with a first control slot 97, and one side of the slot bottom of the first control slot 97 is provided with the first locking inclined surface. Space utilization can be improved. A second control slot 98 is provided on the side wall of the sliding rod 25, where the second locking inclined surface is disposed on one side of the slot bottom of the second control slot 98. Space utilization can be improved. A third control slot 99 is provided corresponding to the control window 35, and the vertical pushing inclined surface 37 is disposed on one side of the slot bottom of the third control slot 99. Space utilization can be improved.

Inclined guide ports 20 are respectively provided at both ends of the sliding sleeve 18 corresponding to the first pin rod portion 30 and the second pin rod portion 33, so that when the sliding sleeve 18 slides toward the first pin rod portion 30 or the second pin rod portion 33, the sliding sleeve can be adapted to the outer hole 19 by inwardly pressing the outer end thereof. The sliding sleeve 18 is provided with a through hole, and the guide rail 17 is slidably inserted through the through hole. The stability of fitting between the sliding sleeve 18 and the guide rail 17 can be improved.

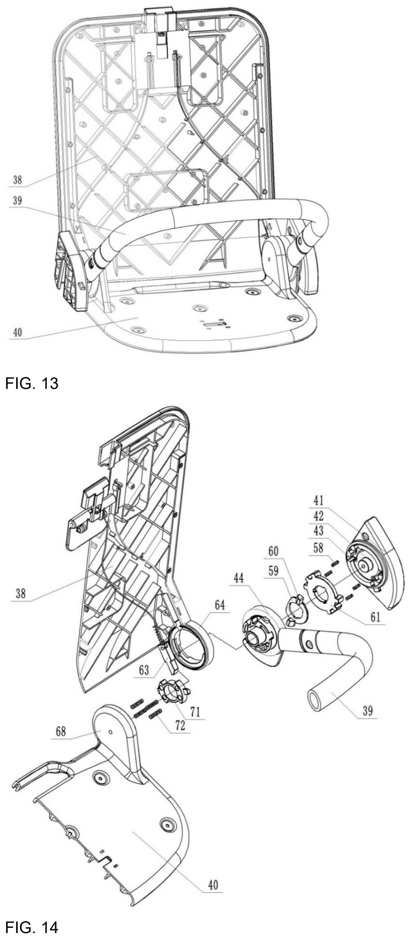

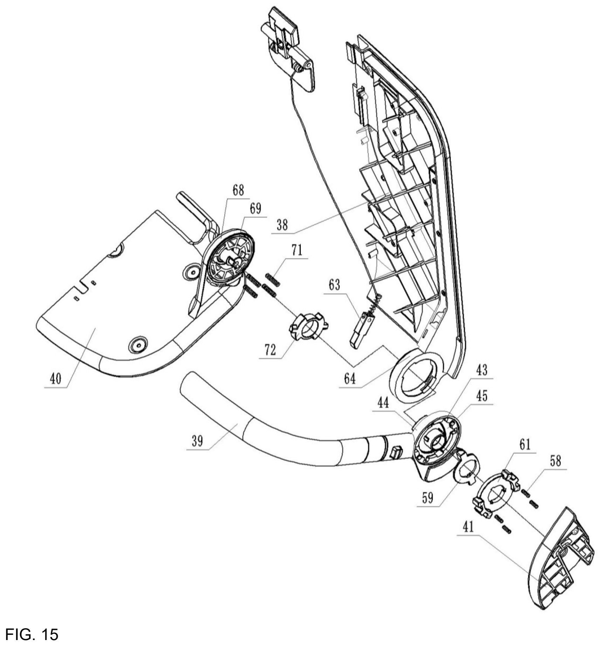

A storage slot 2 is provided outside a front side of the luggage body, and rotary bases 41 are respectively disposed on two sides of an upper end of the storage slot 2. Refer to FIG. 13, FIG. 14, and FIG. 15. The seat assembly comprises armrests 39, a backrest 38, and a seat plate 40, two ends of each of the armrests 39 are respectively provided with armrest turntables 44 corresponding to the two rotary bases 41, two sides of the backrest 38 are respectively provided with backrest turntables corresponding to the two rotary bases 41, and two sides of the seat plate 40 are respectively provided with seat plate 40 turntables corresponding to the two rotary bases 41; and the rotary bases 41, the armrest turntables 44, the backrest turntables, and the seat plate 40 turntables are respectively rotatably fitted.

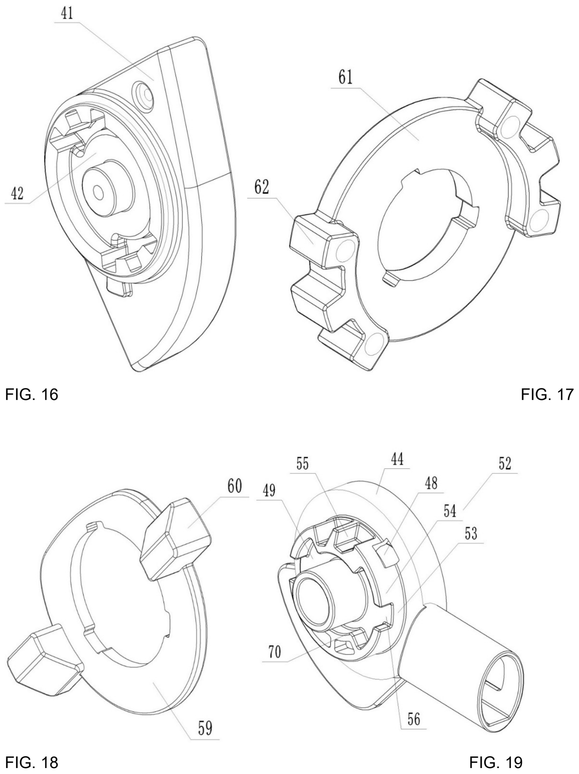

Refer to FIG. 16. Inner disk surfaces of the rotary bases 41 are provided with rotary cavity slots 42, and outer disk surfaces of the armrest turntables 44 are provided with armrest outer cavity slots 45.

The rotary cavity slots 42 and the armrest outer cavity slots 45 are engaged to form an outer locking cavity.

Refer to FIG. 17. A first locking member 61 and a first driving member 59 are distributed from outside to inside within the outer locking cavity.

Refer to FIG. 18. The first driving member 59 is located in the armrest outer cavity slot 45, and the first driving member 59 can axially slide but circumferentially rotate relative to the armrest outer cavity slot 45.

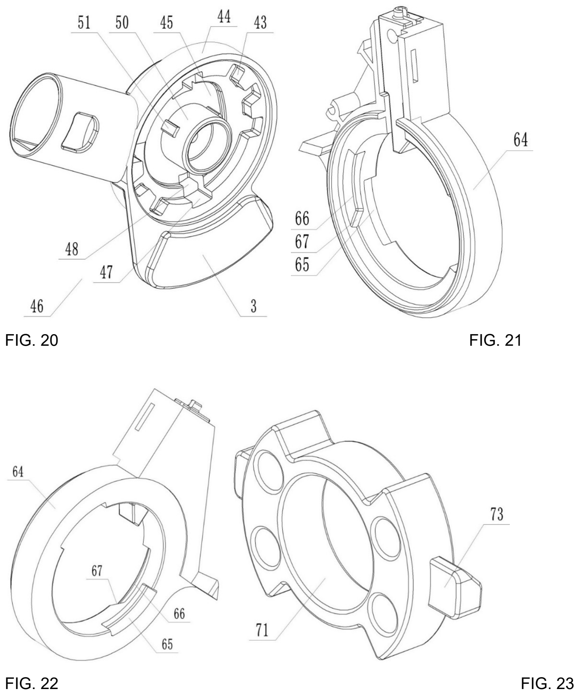

Refer to FIG. 20, a side wall of the outer locking cavity is axially provided with a first guiding member 43 from the rotary cavity slot 42 to the armrest outer cavity slot 45, and the first locking member 61 can axially slide but cannot circumferentially rotate relative to the outer locking cavity via the first guiding member 43. The first guiding member 43 includes a first outer locking guiding section located in the rotary cavity slot 42 and a second outer locking guiding section located in the armrest outer cavity slot 45.

A first spring 58 is disposed between the first locking member 61 and the rotary cavity slot 42, the first spring 58 pushes the first locking member 61 and the first driving member 59 to slide toward an inner end side of the outer locking cavity.

During rotation of the backrest turntable, the first driving member 59 is pushed to slide toward one side of an outer end of a rotating shaft, so that the first locking member 61 is adapted only to the first outer locking guiding section or adapted to both the first outer locking guiding section and the second outer locking guiding section.

When the seat is not used, the armrests 39, the backrests 38, and the seat plate 40 can be folded into the storage slot 2, the backrest 38 serving as an outer cover plate covers the storage slot 2. When the seat is used, the armrests 39, the backrests 38, and the seat plate 40 can be rotated open.

The rotary base 41, the armrest turntable 44, the backrest turntable, and the seat plate 40 turntable are respectively rotatably fitted, thus enabling adjustment of their relative angles and facilitating folding and storage. The outer locking cavity is provided with a first guiding member 43, allowing the first locking member 61 to slide axially via the first guiding member 43. If the first locking member 61 is solely located in the rotary cavity slot 42 or the armrest outer cavity slot 45, relative rotation between the armrest turntable 44 and the rotary base 41 can be achieved. If the first locking member 61 is located in both the armrest outer cavity slot 45 and the rotary cavity slot 42, due to the presence of the first guiding member 43, the first locking member 61 can only slide axially but cannot rotate circumferentially within the armrest outer cavity slot 45 and the rotary cavity slot 42. Therefore, relative rotation between the armrest turntable 44 and rotary base 41 is not possible.

The specific state of the first locking member 61 is determined jointly by the first driving member 59 and the first spring 58. When the first driving member 59 provides thrust to push the first locking member 61, the first locking member 61 will be located in both the armrest outer cavity slot 45 and the rotary cavity slot 42. If the first driving member 59 does not provide thrust, the first locking member 61 is only located within the rotary cavity slot 58 under the push of the first spring 42.

The first guiding member 43 is a first guiding limit slot provided on the side wall of the outer locking cavity, where the first locking member 61 is provided with a first guiding limit tooth 62 that is slidably adapted to the first guiding limit slot. This effectively ensures that the first guiding member 43, the armrest outer cavity slot 45, and the rotary cavity slot 42 can only slide axially but cannot rotate circumferentially.

A guide post 50 is disposed axially at the center of the outer locking cavity. The guide post 50 can further improve the stability of the first driving member 59 and the first locking member 61 sliding in the outer locking cavity.

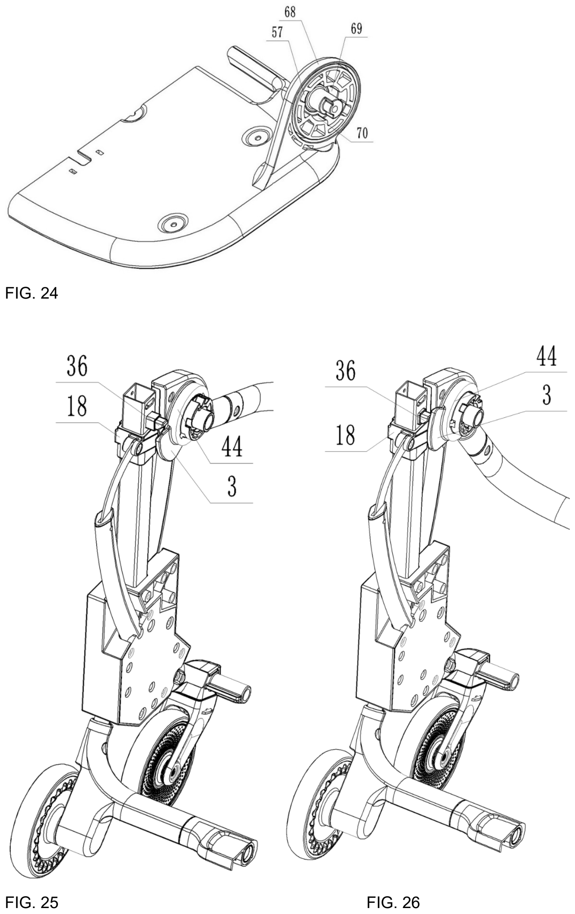

Refer to FIG. 25 and FIG. 26. A driving plate 3 is disposed outside the armrest turntable 44, the driving plate 3 is disposed at an outer port of the control window 35, an outer end of the inclined ejector rod 36 extends to the outside of the control window 35, and the outer end of the inclined ejector rod 36 is provided with a wheel lock inclined surface 4 corresponding to the driving plate 3.

A side wall of the armrest outer cavity slot 45 is provided with an outer locking slot 46, the outer locking slot 46 includes a first outer locking section 47 and a second outer locking section 48, and the first outer locking section 47 is located on an outer end side of the rotating shaft relative to the second outer locking section 48.

An inner end surface of the first driving member 59 is provided with a first single inclined driving tooth 60 corresponding to the outer locking slot 46, and the first single inclined driving tooth 60 is axially slidably fitted to the outer locking slot 46.

An inner disk surface of the armrest turntable 44 is provided with an engaging boss 52, and an outer side wall of the engaging boss 52 includes a first boss section 53 and a second boss section 54 in sequence from an outer end to an inner end; the first boss section 53 is located outside the second outer locking section 48; and a slot bottom of the second outer locking section 48 passes through an outer wall of the first boss section 53.

The outer side wall of the engaging boss 52 is rotatably fitted with the backrest turntable, and an inner edge at an outer end of the backrest turntable is provided with a first arc section unlocking slot 65 corresponding to the first outer locking section 47.

When the rotary base 41, the armrest turntable 44, and the backrest turntable are in a folded state, the first arc section unlocking slot 65 and the second outer locking section 48 are staggered, and an end of the first arc section unlocking slot 65 pushes the first single inclined driving tooth to move to the first outer locking section 47; the first driving member 59 pushes the first locking member 61 to move toward the outer end of the rotating shaft, so that the first locking member 61 is adapted only to the first outer locking guiding section; and the driving plate 3 rotates with the armrest turntable 44 to press the wheel lock inclined surface 4 and push the inclined ejector rod 36 to move into the control window 35.

The wheel lock inclined surface is located on the outer side of the luggage body, and the luggage body is disposed on one side corresponding to the wheel lock inclined surface. During rotation of the driving plate, the edge of the driving plate contacts the wheel lock inclined surface and presses and pushes the inclined ejector rod, so as to easier push the inclined ejector rod.

The backrest turntable rotates relative to the armrest turntable 44 in an unfolding direction until the first arc section unlocking slot 65 coincides with the second outer locking section 48, the first spring 58 pushes the first locking member 61 to move toward an inner end of the rotating shaft, so that the first locking member 61 is adapted to both the first outer locking guiding section and the second outer locking guiding section; the armrest turntable 44 is rotated so that the armrest turntable 44 is in an unfolded state and locked relative to the rotary base 41; and the driving plate 3 rotates with the armrest turntable 44 to leave the inclined ejector rod 36, and the inclined ejector rod 36 moves outside the control window 35.

In this embodiment, the first single inclined surface is disposed at a position where the end of the first arc section contact slot first contacts the first single inclined driving tooth 60 during the folding process of the backrest turntable relative to the armrest 39.

The outer end surface of the first locking member 61 is provided with a hole slot adapted to the first spring 58, so as to provide sufficient space for its expansion and contraction.

A side wall of the engaging boss 52 is provided with at least two positioning slots 55.

The backrest turntable is slidably fitted with a spring locking pin 63 that abuts against the side wall of the engaging boss 52, a front end of the spring locking pin 63 extends into the positioning slot 55, one end of the positioning slot 55 is provided with the slot-exiting inclined surface, and the spring locking pin 63 is adapted to the slot-exiting inclined surface.

When the armrest is folded 39, the driving plate 3 can push the inclined ejector rod 36 to fix the wheel-leg assembly inside the luggage body. When the armrest 39 is opened, the driving plate 3 moves away from the inclined ejector rod 36, the upper section of the guide rail 17 is unlocked, and the wheel-leg assembly can be opened and the sliding sleeve 18 is locked at the lower section of the guide rail 17.

The backrest turntable is rotated, the end of the first arc section unlocking slot 65 pushes the first single inclined driving tooth 60, thereby controlling the first locking member 61 to be located solely in the rotary cavity slot 45 or in both the armrest outer cavity slot 45 and the rotary cavity slot 42.

The spring locking pin 63 is fitted with the positioning slot 55, so that the position of the backrest turntable 39 relative to the armrest can be conveniently locked, preventing rotation thereof.

In this embodiment, the inclined surface of the positioning slot 55 is located at one folding movement side of the backrest turntable relative to the armrest turntable 44, the inclined surface of the spring locking pin 63 is adapted to the inclined surface of the positioning slot 55, and a hole slot is provided to allow space for expansion and contraction of the second spring 72.

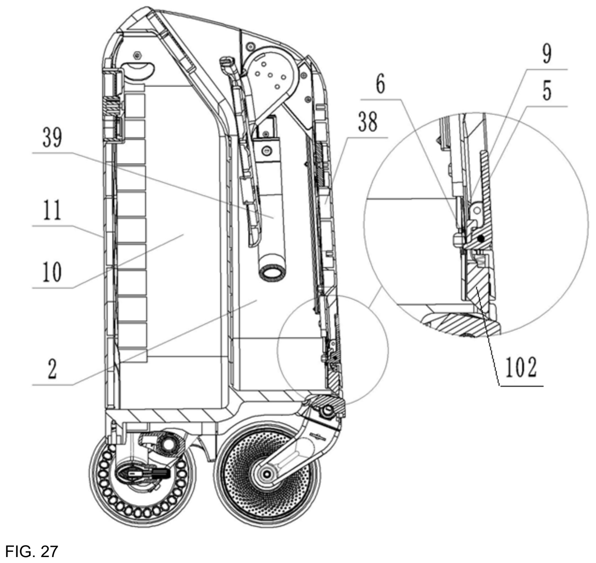

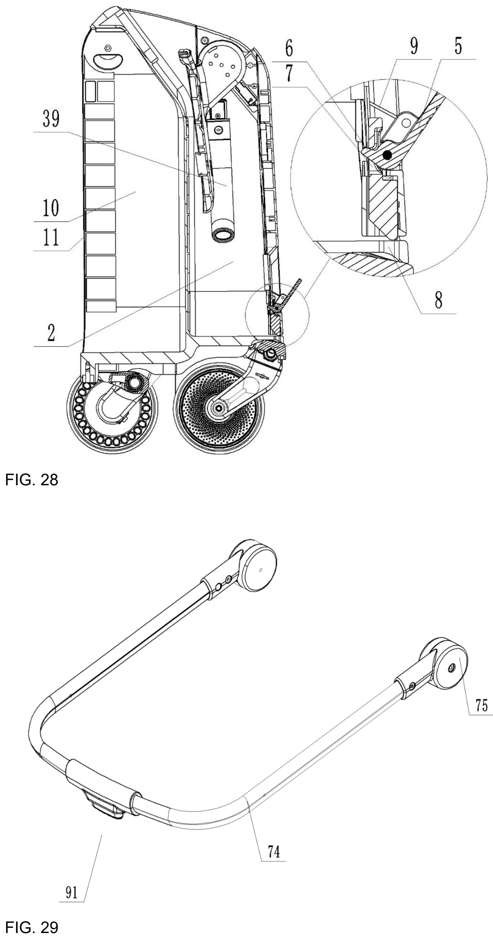

Refer to FIG. 27 and FIG. 28. An outer end edge of the backrest 38 is provided with a spring latch 102 abutting against an inner wall of the storage slot 2, and the inner wall of the storage slot 2 is provided with a first locking hole 8 for insertion of the spring latch 102.

A lever 5 is hinged to a back surface of the backrest 38, the lever 5 is provided with a hook 6, and the spring latch 102 is provided with a hook hole 7 for hanging the hook 6.

One end of a first drive cable 9 is connected to the lever 5, and the other end of the first drive cable 9 is connected to the spring latch 102.

In an initial state, the backrest 38 is engaged with the storage slot 2, the spring latch 102 is inserted forward into the positioning slot 55, the spring latch 102 pulls the lever 5 via the first drive cable 9, the lever 5 is attached to the back surface of the backrest 38, and the spring latch 102 extends and is inserted into the first locking hole 8.

When the lever 5 is toggled, the spring latch 102 is pulled out from the first locking hole 8, and the lever 5 pulls the spring latch 102 out of the positioning slot 55 via the first drive cable 9.

When the seat is used, the armrest 39, the backrest 38, and the seat plate 40 are folded in the storage slot 2 and locked by the spring latch 102 inserted into the first locking hole 8. When the seat is used, the lever 5 is swung so that the spring latch 102 retracts from the first locking hole 8, unlocking the spring latch in the storage slot 2. In this case, the spring latch 102 is pulled by the first drive cable 9, unlocking the relative position of the armrest 39 and the backrest 38. This enables the lever 5 to simultaneously unlock the two components.

Refer to FIG. 19, FIG. 21, and FIG. 24. An end surface of the engaging boss 52 is provided with an armrest inner cavity slot 49, an outer disk surface of the seat plate 40 turntable is provided with a seat plate cavity slot 69, and the armrest inner cavity slot 49 and the seat plate cavity slot 69 are engaged to form an inner locking cavity.

The inner locking cavity is axially provided with a second guiding member 70 and an inner locking slot in sequence from the armrest inner cavity slot 49 to the seat plate cavity slot 69.

A second locking member 71 can axially slide but circumferentially rotate relative to the inner locking cavity via the second guiding member 70, the second guiding member 30 includes a first inner locking guiding section located in the armrest inner cavity slot and a second inner locking guiding section located in the seat plate cavity slot, a second spring 72 is disposed between the second locking member 71 and the seat plate cavity slot 69, and the second spring 72 pushes the second locking member 71 to slide toward an outer end side of the inner locking cavity.

Refer to FIG. 19. The inner locking slot includes a first inner locking section 56 and a second inner locking section 57 from outside to inside, the first inner locking section 56 is located in the second boss section 54 and communicates with the inside and outside of the second boss section 54, and the second inner locking section 57 is located in the seat plate cavity slot 69. Refer to FIG. 21 and FIG. 22. An inner end edge of the backrest turntable is provided with a second arc section unlocking slot 66, and one end of the second arc section unlocking slot 66 is provided with a slot-exiting inclined surface 67 corresponding to a rotation direction.

Refer to FIG. 23. A side wall of the second locking member 71 is provided with a second single inclined driving tooth 73, the second single inclined driving tooth 73 passes through the second arc section unlocking slot 66 via the first inner locking section 56, and an inclined surface of the second single inclined driving tooth 73 is disposed corresponding to the slot-exiting inclined surface 67.

When the armrest turntable 44, the backrest turntable, and the seat plate 40 turntable are in a folded state, the first arc section unlocking slot 65 and the second inner locking section 57 are staggered, so that the second single inclined driving tooth 73 moves into the second inner locking section 57, the second locking member 71 moves toward the inner end of the rotating shaft, and the second locking member 71 is only adapted to the second inner locking guiding section.

When the backrest turntable rotates relative to the armrest turntable 44 in the unfolding direction until the second arc section unlocking slot 66 coincides with the second inner locking section 57, the second spring 72 pushes the second locking member 71 to move toward the outer end of the rotating shaft, so that the second locking member 71 is adapted to both the first inner locking guiding section and the second inner locking guiding section; and the armrest turntable 44 is rotated so that the armrest turntable 44 is in the unfolded state relative to the rotary base 41.

The second locking member 71 locks the relative position of the armrest turntable 44 and the seat plate 40 turntable. If the second locking member 71 can only slide axially but cannot rotate circumferentially relative to the armrest inner cavity slot 49 and the seat plate cavity slot 69, when the second locking member 71 is located only in the armrest inner cavity slot 49, the armrest turntable 44 and the seat plate 40 turntable can rotate relative to each other. However, if the second locking member 71 is located in both the armrest inner cavity slot 49 and the seat plate cavity slot 69, a relative angle between the armrest turntable 44 and the seat plate 40 turntable will be locked. The axial movement of the second locking member 71 is achieved by the movement of the backrest turntable. Specifically, when the second arc section unlocking slot 66 coincides with the first inner locking section 56, the second single inclined driving tooth 73 is located in the second arc section unlocking slot 66, and the second locking member 71 is located only in the armrest inner cavity slot 49. As the armrest, the backrest and the seat plate are unfolded, the backboard turntable rotates accordingly. The slot-exiting inclined surface 67 of the second arc section unlocking slot 66 pushes the second single inclined driving tooth 73 to move toward the seat plate cavity slot 69. The second arc section unlocking slot 66 and the first inner locking section 56 are staggered, and finally, the second locking member 71 is located in both the armrest inner cavity slot 49 and the seat plate cavity slot 69.

In this embodiment, when the second single inclined driving tooth 73 is located in the second arc section unlocking slot 66, the backrest turntable performs a folding movement relative to the armrest turntable 44. The end of the second single inclined driving tooth 73 that contacts the second arc section unlocking slot 66 is provided with the slot-exiting inclined surface 67, and the inclined surface of the second single inclined driving tooth 73 is configured to be adapted to the slot-exiting inclined surface 67.

Refer to FIG. 29. The handle body 74 is included.

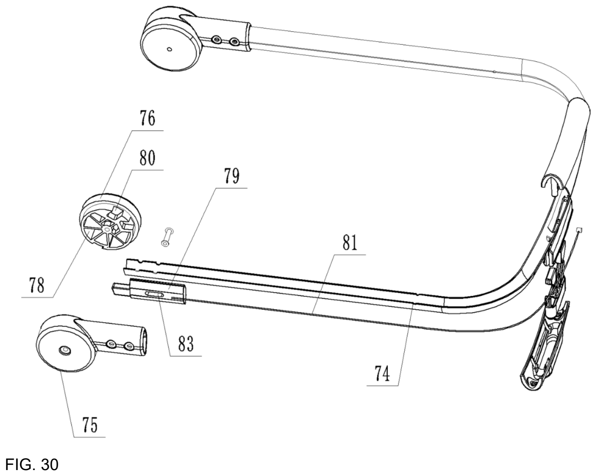

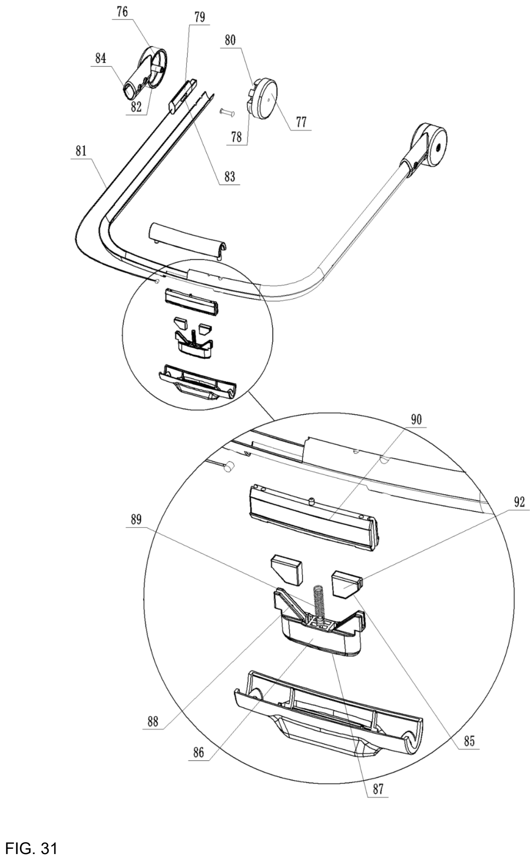

Refer to FIG. 30 and FIG. 31. An end of the handle body 74 is provided with a handle turntable 75, a disk surface of the handle turntable 75 is provided with a handle cavity slot 76, a side wall of the handle cavity slot 76 is provided with a limit pin hole 84, a spring limit pin 79 pointing toward the handle cavity slot 76 is disposed in the limit pin hole 84, a tail end of the spring limit pin 79 is connected to one end of the drive cable 81, and the other end of the drive cable 81 extends to the handle body 74.

A base turntable 77 is respectively disposed at two ends, corresponding to the handle body 74, of the luggage body 1; a disk surface of the base turntable 77 is provided with a limit boss 78 corresponding to the handle cavity slot 76, the base turntable 77 is rotatably engaged with the handle cavity slot 76, and the limit boss 78 is rotatably fitted into the handle cavity slot 76; and a side wall of the limit boss 78 is circumferentially provided with several limit slots 80 adapted to a front end of the spring limit pin 79.

In this solution, the handle body 74 is rotatably fitted with the base turntable 77 of the base via the handle turntable 75. Therefore, under normal conditions, the handle body 74 can rotate relative to the base to change its angle. Since the front end of the spring limit pin 79 is adapted to the limit slot 80 on the side wall of the limit boss 78, when the front end of the spring limit pin 79 is aligned with the limit slot 80, the front end of the spring limit pin 79 is snapped into the limit slot 80, so that the angle between the handle turntable 75 and the base turntable 77 is locked. When the angle between the handle body 74 and the base changes, the front end of the spring limit pin 79 is adapted to different limit slots 80, thereby locking the state and enabling the handle body 74 to be locked at different angles relative to the base. When unlocking is required, the drive cable 81 is pulled backward to unlock, and the drive cable 81 is released to re-lock the relative position between the handle turntable 75 and the base turntable 77.

The axis of the handle cavity slot 76 is provided with an inner shaft 82, and the inner shaft 82 is rotatably fitted with the base turntable 77, so that the relative rotation between the handle turntable 75 and the base turntable 77 can be more stable.

The side wall of the spring limit pin 79 is provided with a limit strip-shaped hole 83 in an axial direction. A travel pin passes through the limit strip-shaped hole 83, and the end of the travel pin is fixed to the limit pin hole 84. This facilitates limiting the forward and backward sliding travel of the spring limit pin 79.

The handle body 74 is provided with a pressing portion 91, the pressing portion 91 is longitudinally slidably fitted with a drive slider 92, and the drive slider 92 is provided with a pressing inclined surface 85; the pressing portion 91 is laterally slidably fitted with an unlocking switch 86, one side of the unlocking switch 86 is provided with a pressing section 87, and the other side of the unlocking switch 86 is provided with an unlocking inclined surface 88 adapted to the pressing inclined surface 85; an unlocking spring (89) is disposed between the unlocking switch 86 and the pressing portion 91, the unlocking spring 89 pushes the unlocking switch 86 to move away from the drive slider 92, and the drive slider 92 slides toward one end of the drive cable 81; and the unlocking inclined surface 88 pushes the pressing inclined surface 85 by pressing the unlocking switch 86, so that the drive slider 92 slides away from one end of the drive cable 81.

The unlocking inclined surface 88 of the unlocking switch 86 pushes the pressing inclined surface 85, so that the drive slider 92 can be efficiently pushed to slide axially, specifically pulling the drive cable 81. The drive slider 92 is pulled to move, thereby making control simpler and more efficient.

Both ends of the handle body 74 are respectively provided with handle cavity slots 76. A drive slider 92 is respectively disposed in the two handle cavity slots 76. The two drive cables 81 respectively extend from the two drive sliders 92 to the pressing portion 91. Ends of the two drive cables 81 are respectively connected to the two drive sliders 92. The unlocking switch 86 is symmetrically provided with the two unlocking inclined surfaces 88, and the two unlocking inclined surfaces 88 are in one-to-one correspondence to the two drive sliders 92.

The two unlocking inclined surfaces 88 and the two drive sliders 92 enable simultaneous control of the two drive cables 81, and the pressure on both sides of the unlocking switch 86 is more balanced.

The pressing portion 91 is disposed in a sliding positioning slot 90. One side of the unlocking switch 86 slidably extends into the sliding positioning slot 90 from the notch thereof. The drive slider 92 is in sliding fit with the sliding positioning groove 90 along a length direction. The unlocking spring 89 is disposed between the two drive sliders 92, and both ends of the unlocking spring 89 respectively abut against the bottom of the sliding positioning slot 90 and the unlocking switch 86. This facilitates more stable sliding of the two drive sliders 92.

The handle body 74 is provided with an inner channel. The drive cable 81 extends from the drive slider 92 to the sliding positioning slot 90 through the internal channel. This prevents interference with external structures.

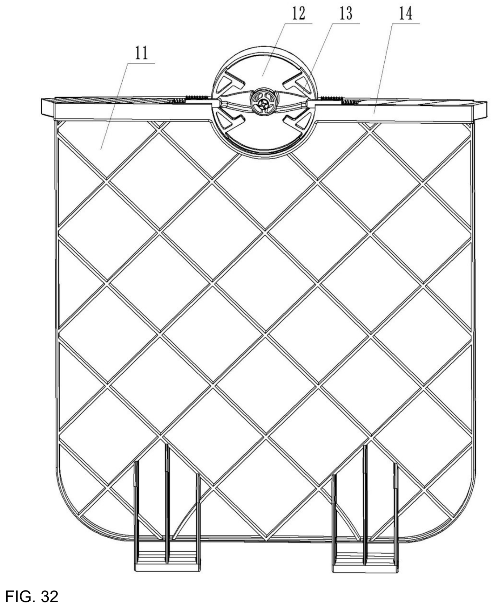

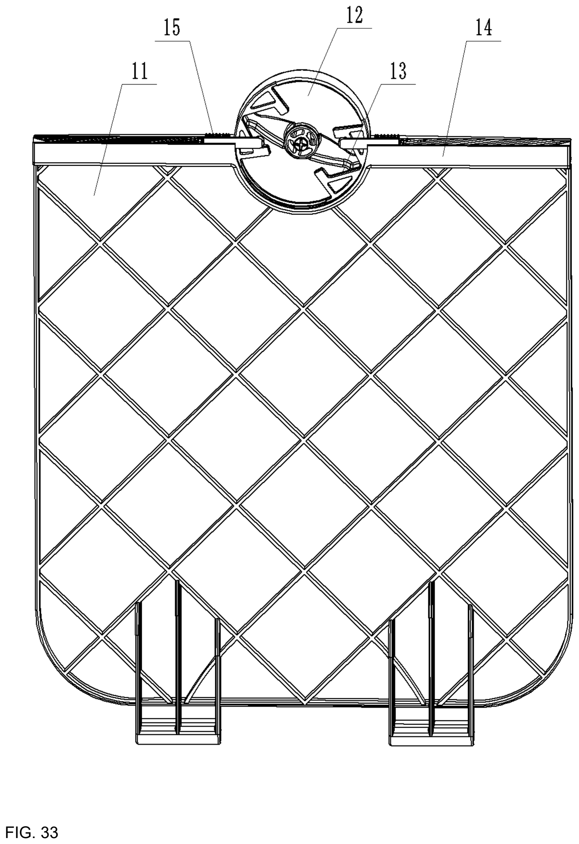

Refer to FIG. 32 and FIG. 33. The luggage body is provided with a storage compartment 10, a compartment opening of the storage compartment 10 is provided with a lid 11, one end of the lid 11 is hinged to the storage compartment 10, and the other end of the lid 11 is provided with a knob switch 12.

Two sides of the knob switch 12 are respectively provided with a locking rod 14, the locking rod 14 is slidably fitted relative to the lid 11, an inner end of the locking rod 14 is provided with a pin hook, the knob switch 12 is provided with a V-shaped contact surface 13 for pulling and hanging the pin hook, an outward-pushing spring 15 is disposed between the locking rod 14 and the lid 11, the outward-pushing spring 15 pushes the locking rod 14 outward relative to the lid 11, and an inner wall of the storage compartment 10 is provided with a second locking hole for insertion of an outer end of the locking rod 14; and when the knob switch 12 is rotated, the V-shaped contact surface 13 drives the pin hook, so that the locking rod 14 retracts inward.

In a normal state, the outer end of the locking rod 14 is fitted with the second locking hole to achieve closed locking of the lid 11 of the storage compartment 10. When the lid needs to be opened, the knob switch 12 is rotated, and the V-shaped contact surface 13 will drive the pin hook inward during rotation, thereby driving the locking rod 14 to slide inward.

Beneficial effects of the present invention are that:
In the solution, luggage and a seat are ingeniously integrated. Thus, through folding, the luggage stroller of the present invention can carry articles while providing a seat function, allowing a user to easily carry a child while transporting luggage. A folding storage design is adopted for an overall structure, so that the seat can be stored when not used, avoiding occupying external space, and preventing the need to carry both the luggage and the stroller, thereby facilitating travel.

The technical features of the above embodiments can be arbitrarily combined. To simplify the descriptions, not all possible combinations of the technical features of the above embodiments are described; however, as long as there is no contradiction in the combination of these technical features, all such combinations shall be deemed to fall within the scope described in this specification.

The above embodiments merely represent several specific embodiments of the present application, and their descriptions are relatively specific and detailed, but they should not be construed as limiting the scope of the invention patent. It should be noted that for those skilled in the art, various modifications and improvements may be made without departing from the spirit of the present application, and all such modifications and improvements fall within the protection scope of the present application. Therefore, the scope of protection for this patent application should be subjected to the protection scope of the appended claims.

## Claims

1. A luggage stroller, comprising a luggage body, wherein the luggage body is provided with a wheel-leg assembly, a seat assembly, and a handle assembly;
the wheel-leg assembly is disposed downwardly from the luggage body, and the wheel-leg assembly is configured to move the luggage body; the seat assembly is disposed on an upper front side of the luggage body, and the seat assembly is configured to provide a foldable seat for use; and the handle assembly is disposed on a rear side of the luggage body and is configured to manually push the luggage body.

2. **The** luggage stroller according to claim 1, wherein a set of the wheel-leg assemblies is respectively disposed on two sides of the luggage body;
the wheel-leg assemblies comprise guide rails (17), sliding sleeves (18), wheel rods (21), and rollers (23);
the luggage body is vertically provided with the guide rails (17), the sliding sleeves (18) are slidably fitted to the guide rails (17), engaging mechanisms are disposed between the guide rails (17) and the sliding sleeves (18), and the engaging mechanisms fix the sliding sleeves (18) to upper sections or lower sections of the guide rails (17); and
upper ends of two of the wheel rods (21) are respectively located on two sides of the guide rails (17), lower ends of the two of the wheel rods 21 are inclined in opposite directions, the wheel rods (21) are slidably fitted relative to the luggage body, the upper ends of the wheel rods (21) are connected to the sliding sleeves (18) via a connecting rod (22), and the lower ends of the wheel rods (21) are provided with the rollers (23).

3. **The** luggage stroller according to claim 2, wherein
each of the engaging mechanisms comprises a sliding rod (25), a first locking block (28), and a second locking block (31);
the sliding rod (25) is axially slidably fitted inside the guide rail (17), a reset elastic member (34) is disposed between the sliding rod (25) and the guide rail (17), and the reset elastic member (34) is configured to drive the sliding rod (25) to slide toward a first end of the guide rail (17);
a side wall of the guide rail (17) is provided with a control window (35), a side wall of the sliding rod (25) is provided with a vertical pushing inclined surface (37), the control window (35) is slidably fitted with an inclined ejector rod (36), and a front end of the inclined ejector rod (36) is disposed corresponding to the vertical pushing inclined surface (37);
the first locking block (28) and the second locking block (31) are respectively disposed corresponding to the upper section and lower section of the guide rail (17);
the first locking block (28) is provided with a first control inclined surface (29) and a first pin rod portion (30), the side wall of the sliding rod (25) is provided with a first locking inclined surface (26) adapted to the first control inclined surface (29), a side wall of the upper section of the guide rail (17) is provided with a first locking hole (93) adapted to the first pin rod portion (30), and the first locking block (28) is provided with a first locking elastic member (94) for pushing the first locking block toward the first locking hole (93);
the second locking block (31) is provided with a second control inclined surface (32) and a second pin rod portion (33), the side wall of the sliding rod (25) is provided with a second locking inclined surface (27) adapted to the second control inclined surface (32), a side wall of the lower section of the guide rail (17) is provided with a second locking hole (95) adapted to the second pin rod portion (33), and the second locking block (31) is provided with a second locking elastic member (96) for pushing the second locking block toward the second locking hole (95);
only one of two pairs of the first locking inclined surface (26) and the first control inclined surface (29), and the second locking inclined surface (27) and the second control inclined surface (32) is aligned at any time;
when the inclined ejector rod (36) slides toward an end away from the vertical pushing inclined surface (37),
the reset elastic member (34) pushes the sliding rod (25) to slide toward the lower section, the first locking inclined surface (26) pushes the first control inclined surface (29), the first locking inclined surface (26) moves out of contact and alignment with the first control inclined surface (29), the first locking block (28) slides in a direction away from the first locking hole (93), and the first pin rod portion (30) retracts from the first locking hole (93); and the second locking inclined surface (27) comes into contact and alignment with the second control inclined surface (32), the second locking elastic member (96) pushes the second locking block (31) to slide toward the second locking hole (95), and the second pin rod portion (33) extends outward from the second locking hole (95); or
when the inclined ejector rod (36) slides toward an end close to the vertical pushing inclined surface (37),
the inclined ejector rod (36) pushes the vertical pushing inclined surface (37), so that the sliding rod (25) slides toward the upper section, the second locking inclined surface (27) pushes the second control inclined surface (32) to come into contact and alignment; the second locking inclined surface (27) pushes the second control inclined surface (32) out of contact and alignment, the second locking block (31) slides in a direction away from the second locking hole (95), and the second pin rod portion (33) retracts from the second locking hole (95); and the first locking inclined surface (26) comes contact and alignment with the first control inclined surface (29), the first locking elastic member (94) pushes the first locking block (28) to slide toward the first locking hole (93), and the first pin rod portion (30) extends outward from the first locking hole (93); and
the sliding sleeve (18) is provided with an outer hole (19) adapted to the first pin rod portion (30) or the second pin rod portion (33).

4. **The** luggage stroller according to claim 3, wherein
a storage slot (2) is provided outside a front side of the luggage body, and rotary bases (41) are respectively disposed on two sides of an upper end of the storage slot (2); the seat assembly comprises armrests (39), a backrest (38), and a seat plate (40), two ends of each of the armrests (39) are respectively provided with armrest turntables (44) corresponding to the two rotary bases (41), two sides of the backrest (38) are respectively provided with backrest turntables corresponding to the two rotary bases (41), and two sides of the seat plate (40) are respectively provided with seat plate (40) turntables corresponding to the two rotary bases (41); and the rotary bases (41), the armrest turntables (44), the backrest turntables, and the seat plate (40) turntables are respectively rotatably fitted;
inner disk surfaces of the rotary bases (41) are provided with rotary cavity slots (42), and outer disk surfaces of the armrest turntables (44) are provided with armrest outer cavity slots (45);
the rotary cavity slots (42) and the armrest outer cavity slots (45) are engaged to form an outer locking cavity;
a first locking member (61) and a first driving member (59) are distributed from outside to inside within the outer locking cavity;
the first driving member (59) is located in the armrest outer cavity slot (45), and the first driving member (59) is axially slidable but circumferentially non-rotatable relative to the armrest outer cavity slot (45);
a side wall of the outer locking cavity is axially provided with a first guiding member (43) from the rotary cavity slot (42) to the armrest outer cavity slot (45), and the first locking member (61) is axially slidable but circumferentially non-rotatable relative to the outer locking cavity via the first guiding member (43);
a first spring (58) is disposed between the first locking member (61) and the rotary cavity slot (42), the first spring (58) pushes the first locking member (61) and the first driving member (59) to slide toward an inner end side of the outer locking cavity, and the first guiding member comprises a first outer locking guiding section located in the rotary cavity slot (42) and a second outer locking guiding section located in the armrest outer cavity slot; and
during rotation of the backrest turntable, the first driving member (59) is pushed to slide toward one side of an outer end of a rotating shaft, so that the first locking member (61) is adapted only to the first outer locking guiding section or adapted to both the first outer locking guiding section and the second outer locking guiding section.

5. The luggage stroller according to claim 4, wherein
a driving plate (3) is disposed outside the armrest turntable (44), the driving plate (3) is disposed at an outer port of the control window (35), an outer end of the inclined ejector rod (36) extends to the outside of the control window (35), and the outer end of the inclined ejector rod (36) is provided with a wheel lock inclined surface (4) corresponding to the driving plate (3);
a side wall of the armrest outer cavity slot (45) is provided with an outer locking slot (46), the outer locking slot (46) comprises a first outer locking section (47) and a second outer locking section (48), and the first outer locking section (47) is located on an outer end side of the rotating shaft relative to the second outer locking section (48); an inner end surface of the first driving member (59) is provided with a first single inclined driving tooth (60) corresponding to the outer locking slot (46), and the first single inclined driving tooth (60) is axially slidably fitted to the outer locking slot (46); an inner disk surface of the armrest turntable (44) is provided with an engaging boss (52), and an outer side wall of the engaging boss (52) comprises a first boss section (53) and a second boss section (54) in sequence from an outer end to an inner end;
the first boss section (53) is located outside the second outer locking section (48); and a slot bottom of the second outer locking section (48) passes through an outer wall of the first boss section (53);
the outer side wall of the engaging boss (52) is rotatably fitted with the backrest turntable, and an inner edge at an outer end of the backrest turntable is provided with a first arc section unlocking slot (65) corresponding to the first outer locking section (47);
when the rotary base (41), the armrest turntable (44), and the backrest turntable are in a folded state, the first arc section unlocking slot (65) and the second outer locking section (48) are staggered, and an end of the first arc section unlocking slot (65) pushes the first single inclined driving tooth (60) to move to the first outer locking section (47); the first driving member (59) pushes the first locking member (61) to move toward the outer end of the rotating shaft, so that the first locking member (61) is adapted only to the first outer locking guiding section; and the driving plate (3) rotates with the armrest turntable (44) to press the wheel lock inclined surface (4) and push the inclined ejector rod (36) to move into the control window (35);
the backrest turntable rotates relative to the armrest turntable (44) in an unfolding direction until the first arc section unlocking slot (65) coincides with the second outer locking section (48), the first spring (58) pushes the first locking member (61) to move toward an inner end of the rotating shaft, so that the first locking member (61) is adapted to both the first outer locking guiding section and the second outer locking guiding section; the armrest turntable (44) is rotated so that the armrest turntable (44) is in an unfolded state and locked relative to the rotary base (41); and the driving plate (3) rotates with the armrest turntable (44) to leave the inclined ejector rod (36), and the inclined ejector rod (36) moves outside the control window (35);
a side wall of the engaging boss (52) is provided with at least two positioning slots (55); and
the backrest turntable is slidably fitted with a spring locking pin (63) that abuts against the side wall of the engaging boss (52), and a front end of the spring locking pin (63) extends into the positioning slot (55).

6. The luggage stroller according to claim 5, wherein
an outer end edge of the backrest (38) is provided with a spring latch (102) abutting against an inner wall of the storage slot (2), and the inner wall of the storage slot (2) is provided with a first locking hole (8) for insertion of the spring latch (102);
a lever (5) is hinged to a back surface of the backrest (38), the lever (5) is provided with a hook (6), and the spring latch (102) is provided with a hook hole (7) for hanging the hook (6);
one end of a first drive cable (9) is connected to the lever (5), and the other end of the first drive cable (9) is connected to the spring latch (102);
in an initial state, the backrest (38) is engaged with the storage slot (2), the spring latch (102) is inserted forward into the positioning slot (55), the spring latch (102) pulls the lever (5) via the first drive cable (9), the lever (5) is attached to the back surface of the backrest (38), and the spring latch (102) extends and is inserted into the first locking hole (8); and
when the lever (5) is toggled, the spring latch (102) is pulled out from the first locking hole (8), and the lever (5) pulls the spring latch (102) out of the positioning slot (55) via the first drive cable (9).

7. The luggage stroller according to claim 5, wherein
an end surface of the engaging boss (52) is provided with an armrest inner cavity slot (49), an outer disk surface of the seat plate (40) turntable is provided with a seat plate cavity slot (69), and the armrest inner cavity slot (49) and the seat plate cavity slot (69) are engaged to form an inner locking cavity;
the inner locking cavity is axially provided with a second guiding member (70) and an inner locking slot in sequence from the armrest inner cavity slot (49) to the seat plate cavity slot (69);
a second locking member (71) is axially slidable but circumferentially non-rotatable relative to the inner locking cavity via the second guiding member (70), the second guiding member comprises a first inner locking guiding section located in the armrest inner cavity slot and a second inner locking guiding section located in the seat plate cavity slot, a second spring (72) is disposed between the second locking member (71) and the seat plate cavity slot (69), and the second spring (72) pushes the second locking member (71) to slide toward an outer end side of the inner locking cavity;
the inner locking slot comprises a first inner locking section (56) and a second inner locking section (57), the first inner locking section (56) is located in the second boss section (54) and communicates with the inside and outside of the second boss section (54), the second inner locking section (57) is located in the seat plate cavity slot (69), an inner end edge of the backrest turntable is provided with a second arc section unlocking slot (66), and one end of the second arc section unlocking slot (66) is provided with a slot-exiting inclined surface (67) corresponding to a rotation direction; a side wall of the second locking member (71) is provided with a second single inclined driving tooth (73), the second single inclined driving tooth (73) passes through the second arc section unlocking slot (66) via the first inner locking section (56), and an inclined surface of the second single inclined driving tooth (73) is disposed corresponding to the slot-exiting inclined surface (67); and
when the armrest turntable (44), the backrest turntable, and the seat plate (40) turntable are in a folded state, the first arc section unlocking slot (65) and the second inner locking section (57) are staggered, so that the second single inclined driving tooth (73) moves into the second inner locking section (57), the second locking member (71) moves toward the inner end of the rotating shaft, and the second locking member (71) is only adapted to the second inner locking guiding section; or
when the backrest turntable rotates relative to the armrest turntable (44) in the unfolding direction until the second arc section unlocking slot (66) coincides with the second inner locking section (57), the second spring (72) pushes the second locking member (71) to move toward the outer end of the rotating shaft, so that the second locking member (71) is adapted to both the first inner locking guiding section and the second inner locking guiding section; and the armrest turntable (44) is rotated so that the armrest turntable (44) is in the unfolded state relative to the rotary base (41).

8. **The** luggage stroller according to claim 1, wherein
the handle assembly comprises a handle body (74);
an end of the handle body (74) is provided with a handle turntable (75), a disk surface of the handle turntable (75) is provided with a handle cavity slot (76), a side wall of the handle cavity slot (76) is provided with a limit pin hole (84), a spring limit pin (79) pointing toward the handle cavity slot (76) is disposed in the limit pin hole (84), a tail end of the spring limit pin (79) is connected to one end of the drive cable (81), and the other end of the drive cable (81) extends to the handle body (74); and
a base turntable (77) is respectively disposed at two ends, corresponding to the handle body (74), of the luggage body (1); a disk surface of the base turntable (77) is provided with a limit boss (78) corresponding to the handle cavity slot (76), the base turntable (77) is rotatably engaged with the handle cavity slot (76), and the limit boss (78) is rotatably fitted into the handle cavity slot (76); and a side wall of the limit boss (78) is circumferentially provided with several limit slots (80) adapted to a front end of the spring limit pin (79).

9. The luggage stroller according to claim 8, wherein
the handle body (74) is provided with a pressing portion (91), the pressing portion (91) is longitudinally slidably fitted with a drive slider (92), and the drive slider (92) is provided with a pressing inclined surface (85); the pressing portion (91) is laterally slidably fitted with an unlocking switch (86), one side of the unlocking switch (86) is provided with a pressing section (87), and the other side of the unlocking switch (86) is provided with an unlocking inclined surface (88) adapted to the pressing inclined surface (85); an unlocking spring (89) is disposed between the unlocking switch (86) and the pressing portion (91), the unlocking spring (89) pushes the unlocking switch (86) to move away from the drive slider (92), and the drive slider (92) slides toward one end of the drive cable (81); and the unlocking inclined surface (88) pushes the pressing inclined surface (85) by pressing the unlocking switch (86), so that the drive slider (92) slides away from one end of the drive cable (81).

10. The luggage stroller according to claim 9, wherein
the luggage body is provided with a storage compartment (10), a compartment opening of the storage compartment (10) is provided with a lid (11), one end of the lid (11) is hinged to the storage compartment (10), and the other end of the lid (11) is provided with a knob switch (12); and
two sides of the knob switch (12) are respectively provided with a locking rod (14), the locking rod (14) is slidably fitted relative to the lid (11), an inner end of the locking rod (14) is provided with a pin hook, the knob switch (12) is provided with a V-shaped contact surface (13) for pulling and hanging the pin hook, an outward-pushing spring (15) is disposed between the locking rod (14) and the lid (11), the outward-pushing spring (15) pushes the locking rod (14) outward relative to the lid (11), and an inner wall of the storage compartment (10) is provided with a second locking hole for insertion of an outer end of the locking rod (14); and when the knob switch (12) is rotated, the V-shaped contact surface (13) drives the pin hook, so that the locking rod (14) retracts inward.
